Europäisches Patentamt

European Patent Office

Office européen des brevets

(11) Publication number: **0 274 199 B1**

# EUROPEAN PATENT SPECIFICATION

(45) Date of publication of patent specification: **13.05.92**

(51) Int. Cl.⁵: **G02B 6/26,** G02B 6/36, G02B 6/30

(21) Application number: **87309916.2**

(22) Date of filing: **10.11.87**

(54) Coupling of optical fibres to optical waveguides.

(30) Priority: **10.11.86 GB 8626816**

(43) Date of publication of application:
**13.07.88 Bulletin 88/28**

(45) Publication of the grant of the patent:
**13.05.92 Bulletin 92/20**

(84) Designated Contracting States:
**AT BE CH DE ES FR GR IT LI NL SE**

(56) References cited:
**EP-A- 0 170 457**

**IEE PROCEEDINGS SECTION, vol. 132, no. 5, Part J, October 1985, pages 291-296, Stevenage, Herts, GB; J.P.G. BRISTOW et al.: "Locating and coupling fibres to integrated stripe waveguides"**

**IEEE JOURNAL OF LIGHTWAVE TECHNOLOGY, vol. LT-3, no. 4, August 1985, pages 795-798, New York, US; E.J. MURPHY et al.: "Permanent attachment of single-mode fiber arrays to waveguides"**

(73) Proprietor: **BICC Public Limited Company Devonshire House Mayfair Place London W1X 5FH(GB)**

(72) Inventor: **Keene, Ian William 59, Selworthy Road Battersea London, SW11 3NG(GB)**

(74) Representative: **Ross Gower, Edward Lewis et al BICC plc Patents & Licensing Department Ouantum House Maylands Avenue Hemel Hempstead, Herts. HP2 4SJ(GB)**

# Description

This invention relates to the jointing of a plurality of optical fibres, such as the optical fibres of an optical fibre ribbon, to optical waveguides of an optical component of the kind comprising a substrate supporting a plurality of optical waveguides. The invention is especially, but not exclusively, concerned with the jointing of a plurality of optical fibres to the optical waveguides of an optical component of the aforesaid kind generally referred to as an integrated optic device or an integrated optic chip.

In the specification of EP-A-0170457 there is described and illustrated a method of affixing a single mode optical fibre to a waveguide substrate in optical alignment with a waveguide thereon, which method comprises the steps of preparing an end of the fibre such as to have a planar end face substantially normal with respect to the fibre axis, mounting on the surface of the substrate in which the waveguide is embedded a support block which straddles the waveguide and which has an end face substantially co-planar with the termination of the waveguide, optically aligning the fibre core and the waveguide, and affixing the end face of the optical fibre with transparent adhesive to the waveguide substrate and block. This specification is silent on how the method described can be modified to affix a plurality of optical fibres, such as the optical fibres of an optical fibre ribbon, to waveguides embedded in a substrate although it indicates that the method described can be used for this purpose.

In the paper entitled "Permanent Attachment of Single-Mode Fibre Arrays to Waveguides" by E.J. Murphy et al which appeared in the IEEE Journal of Light Technology, Vol. LT-3, No. 4 of August, 1985, a method of permanently attaching a plurality of optical fibres to waveguides embedded in a substrate is described. In this method, the optical fibres are secured by epoxy resin in a plurality of anisotropically etched silicon V-grooves which position the fibres such that their cores are precisely periodically spaced along a straight line. The end faces of the optical fibres are then polished and the plurality of fibres, secured in the V-grooves, is butt coupled to an array of straight waveguides embedded in a substrate, the fibres and waveguides being aligned by simultaneously maximising the throughput of two of the fibre-waveguide channels. Permanent attachment of the fibres to the waveguides is then effected using UV curable cement. This method has the disadvantage that it requires that the transverse spacing of the waveguides embedded in the substrate and the transverse spacing of the V-groove in which the optical fibres are secured are identical.

It is an object of the present invention to provide an improved method of effecting permanent end-to-end connections between a plurality of optical fibres and optical waveguides of an optical component of the aforesaid kind.

According to the invention, the improved method comprises the steps of positioning the optical component to one side of a jointing station with end faces of the optical waveguides of the component exposed at the side face of the substrate nearer the jointing station; stripping any protective covering from an end portion of each length of optical fibre to provide exposed end portions of the optical fibres; preparing the end faces of the exposed end portions of the optical fibres so that the end face of each optical fibre is substantially smooth; arranging the exposed end portions of the optical fibres in approximately axial alignment with, but spaced from the end faces of, the optical waveguides; so clamping the exposed end portions of the optical fibres that the exposed end portion of each optical fibre can be caused to move lengthwise towards the substrate to a limited extent relative to the exposed end portions of the other of said optical fibres; arranging the exposed end portions of the optical fibres, over a part of their lengths between the position at which they are so clamped and the distal ends of the exposed end portions of the optical fibres so that each fibre follows a curved path whose centre of curvature lies on a line extending transversely of said optical fibres; causing the exposed end portion of an outermost optical fibre to straighten and, instead, follow a substantially rectilinear path so that, as a result, its end to be connected protrudes beyond the ends of the exposed end portions of the other unconnected optical fibres with its end face spaced from the end face of the corresponding optical waveguide of the optical component; effecting accurate axial alignment of the core of said optical fibre and the corresponding optical waveguide; applying curable adhesive to said optical fibre and permitting or causing the adhesive to cure so that said optical fibre is permanently fixed with respect to the optical component; and repeating the latter three steps for each immediately adjacent exposed end portion of optical fibre and corresponding optical waveguide until permanent end-to-end connections have been effected between all the optical fibres and corresponding optical waveguides of the optical component.

In one preferred technique of applying curable adhesive to said optical fibre in such a way that the optical fibre is permanently fixed with respect to the optical component in axial alignment with the corresponding optical waveguide, the side face of the optical component in which the end faces of the optical waveguides are exposed has integral therewith or permanently connected a supporting body, the exposed end portion of each optical fibre is disposed above the supporting body and the end of the exposed portion of each optical fibre is so permanently connected to the supporting body by curable adhesive that each optical fibre is indirectly permanently connected to the optical component in axial alignment with the corresponding optical waveguide. In this case, in effecting accurate axial alignment of the core of said optical fibre and the corresponding optical waveguide, preferably after the exposed end portion of said optical fibre has been so straightened, the said optical fibre is fixed and the position of the optical component with respect to said fixed optical fibre is adjusted until the axes of the core of the fixed optical fibre and of the corresponding optical waveguide are in alignment. In this case, also, preferably index matching liquid and/or anti-reflective material is present or introduced between the spaced end faces of said optical fibre and the corresponding optical waveguide.

In a second preferred technique of applying curable adhesive to said optical fibre in such a way that said optical fibre is permanently fixed to the optical component in axial alignment with the corresponding optical waveguide, a transparent curable adhesive is introduced between the spaced end faces of said optical fibre and of the substrate of the optical component and is permitted or caused to cure to effect the permanent connection. Preferably, in this case, the potential area of contact between the end face of said optical fibre and the end face of the substrate is increased by mounting on the uppermost surface of the substrate a supporting body which overlies the substrate and which has a side face that is substantially co-planar with the side face of the substrate in which the end faces of the optical waveguides are exposed, the transparent curable adhesive being introduced between the end face of said optical fibre and the end faces of the substrate and overlying supporting block. In using this technique, preferably in effecting accurate axial alignment of the core of the optical fibre and the corresponding optical waveguide, the optical component is so clamped that it is fixed and said optical fibre is moved with respect to the optical component until the axes of the core of the optical fibre and of the corresponding optical waveguide are in axial alignment.

In all of the above techniques of applying curable adhesive in which a supporting body is employed, preferably the supporting body is of a material which is the same as or which is similar to the material of the substrate of the optical component.

In all cases, also, preferably at a position spaced lenghwise from the jointing station at which permanent connections between the optical fibres and the corresponding optical waveguides have been made, the exposed portions of the optical fibres are permanently connected to a supporting substrate by means of a curable adhesive.

The end faces of the exposed end portions of the optical fibres may be prepared so that the end face of each optical fibre is substantially smooth and flat and lies either in a plane radial to the fibre axis or in a plane inclined at an acute angle to said radial plane; alternatively, the end face of each optical fibre may be so prepared that it is substantially smooth and rounded.

The improved method of the present invention is especially, but not exclusively, suitable for effecting permanent end-to-end connections between the optical fibres of an optical fibre ribbon and optical waveguides of an optical component of the aforesaid kind.

Preferably, the limited lengths of the exposed end portions of the optical fibres are arranged so that each fibre follows a curved path whose centre of curvature lies on a line extending transversely of the optical fibres by introducing under said limited lengths of the exposed end portions of the optical fibres in a direction transversely of the optical fibres an elongate member which has a convexly curved surface over and at least partially around which the exposed end portions of the optical fibres pass and which can be moved incrementally in the direction of its length and tranversely of the optical fibres in such a way that each optical fibre in turn can be caused to drop off an end of the elongate member and adopt a substantially straight and rectilinear path so that its end to be permanently connected to a corresponding optical waveguide then protrudes beyond the ends of the exposed end portions of the other unconnected optical fibres. Incremental movement of the elongate member in the direction transverse of the optical fibres is preferably effected by a screw threaded arrangement.

Clamping of the exposed end portions of the optical fibres preferably is effected by arranging for the exposed end portions to lie in a plurality of longitudinally extending substantially parallel grooves in the upper surface of the base plate of a material having a low coefficient of friction, e.g. silicon, and by retaining them thereon by a spring-loaded pressure pad, e.g. of a rubber-like material, having a surface which engages the optical fibres and which is of a material having a low coefficient of friction, e.g. polytetrafluorethylene. In this case, the elongate member having a convexly curved surface over which the exposed end portions of the optical fibres lie, preferably comprises a rod of circular cross section having in its surface a single helically extending groove within and partially around turns of which the exposed end portions of the optical fibres are arranged to lie. The turns of the groove in the rod will be in substantial alignment with the grooves in the base plate of the clamping means.

The improved method of the present invention is suitable for use with optical components in which the optical waveguides are wholly or partially embedded in the substrate and for use with optical components in which the optical waveguides are carried on the upper surface of a substrate.

The improved method of the present invention has the important advantages that it provides for effecting a plurality of permanent end-to-end connections between optical fibres and optical waveguides of an optical component of the aforesaid kind in a simple and rapid manner. Optimum axial alignment of all the optical fibres with their corresponding optical waveguides can be effected by sequential automatic micro positioning with optical monitoring to ascertain that accurate axial alignment has been obtained. The improved method is especially suitable for use with optical fibre ribbon comprising production quality optical fibres (with corresponding tolerances). This renders the improved method especially suitable for splicing of optical components of the aforesaid kind into systems. The improved method also provides for inexpensive and labour-efficient pigtailing of optical components. Where the optical fibres have thin buffer coatings, the spacing between the optical waveguides of the optical component may be relatively small and this is attractive from the point of view of the design of the optical component.

The invention is further illustrated by a description, by way of example, of two preferred techniques for effecting permanent connection between one optical fibre of an optical fibre ribbon and a corresponding optical waveguide of an integrated optic device or chip, with reference to the accompanying drawings, in which:-

Figures 1 and 2, respectively, are side and plan views of the preferred apparatus for effecting permanent connection between one optical fibre of an optical fibre ribbon and a corresponding optical waveguide of an integrated optic device or chip;

Figure 3 is a diagrammatic side view of one preferred permanent connection between one optical fibre of an optical fibre ribbon and a corresponding optical waveguide of an integrated optic device or chip, effected using the apparatus shown in Figures 1 and 2, and

Figure 4 is a diagrammatic side view of a second preferred permanent connection between one optical fibre of an optical fibre ribbon and a corresponding optical waveguide of an integrated optic device or chip, effected using the apparatus shown in Figures 1 and 2.

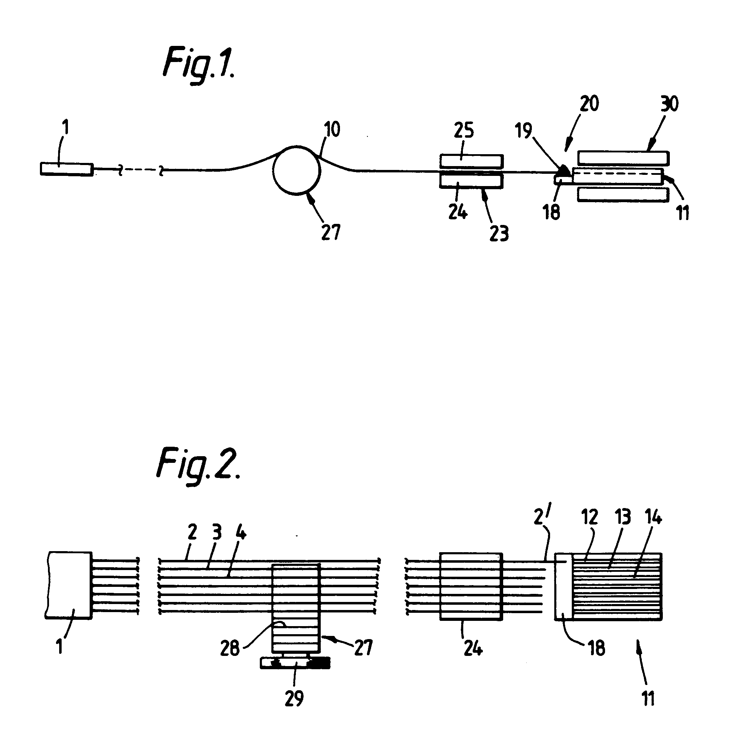

Referring to Figures 1 to 3, the preferred apparatus includes a jointing station 20 at which the plurality of optical fibres of an optical fibre ribbon 1 can be permanently connected end-to-end to the optical waveguides of an integrated optic device or chip 11 of the kind comprising a substrate supporting a plurality of optical waveguides. Positioned on one side of the jointing station 20, is an optical fibre clamping device 23 comprising a base plate 24 of silicon having in its upper surface a plurality of longitudinally extending parallel grooves and, for retaining a plurality of optical fibres of the optical fibre ribbon 1 in the grooves, a spring-loaded pressure pad 25 of a rubber-like material having an undersurface of polytetrafluoroethylene which will engage the optical fibres. Positioned beyond the clamping device 23 remote from the jointing station 20 is a rod 27 of circular cross-section having in its surface a single helically extending groove 28 and, at one of its ends, a knurled operating knob 29. As will be seen, the rod 27 extends in a direction normal to the grooves in the upper surface of the base plate 24 of the clamping device 23 and, by appropriate rotation of the knurled knob 29, can be caused to move incrementally in either direction normal to the grooves. Positioned on the other side of the jointing station 20, is an adjustable clamping device 30 for supporting an integrated optic device or chip 11, the clamping device being adjustable with respect to the clamping device 23 in a direction lengthwise of and in two directions normal to the grooves of the clamping device 23 and rotationally about axes extending in said three directions.

In using the preferred apparatus illustrated in Figures 1 and 2 to effect permanent end-to-end connections between the plurality of optical fibres of the optical fibre ribbon 1 and the optical waveguides of an integrated optic device or chip 11, an end portion of the length of optical fibre ribbon is stripped to provide exposed end portions 2, 3, 4... of the optical fibres and the end faces of the exposed end portions of the optical fibres are prepared so that the end face of each optical fibre is flat and lies in a plane radial to the fibre axis.

A substantially rigid supporting body 18 is permanently connected to a lower part of the side face of the substrate of the integrated optic device or chip 11 in which the end faces of the optical waveguides 12,13,14... are exposed and the integrated optic device or chip is positioned in the clamp 30 with said side face of the substrate at which the end faces of the optical waveguides are exposed nearer the jointing station 20. The exposed end portions of the optical fibres 2, 3, 4...

are spaced a short distance from and are arranged in approximately axial alignment with the optical waveguides 12, 13, 14.... at the jointing station 20 and the exposed end portions are arranged to lie in the longitudinally extending parallel grooves in the upper surface of the base plate 24 of the clamping device 23 and are clamped therein by the spring-loaded pressure pad 25. By virtue of the fact that the base plate 24 is made of silicon and the undersurface of the pressure pad 25 is make of polytetrafluoroethylene, the exposed end portion of each optical fibre 2,3,4... of the optical fibre ribbon 1 can move lengthwise to a limited extent relative to the exposed end portions of the other optical fibres of the length of optical fibre ribbon. In their passage from the cut-back end of the optical fibre ribbon 1 to the clamping device 23, the exposed end portions of the optical fibres 2,3,4... of the optical fibre ribbon lie in turns of the single helically extending groove 28 on the transversely movable rod 27 so that, between the cut-back end of the optical fibre ribbon and the clamping device 23, the exposed end portions of the optical fibres follow a curved path 10 whose centres of curvature lie on a line extending transversely of the length of optical fibre ribbon (see Figure 1).

The helically grooved rod 27 is then unscrewed incrementally in such a direction that the exposed end portion of an outermost optical fibre 2 of the length of optical fibre ribbon 1 falls off the free end of the rod and adopts a straight and rectilinear path so that its end 2' to be connected to the corresponding waveguide 12 of the integrated optic device or chip 11 protrudes beyond the ends of the exposed end portions of the other optical fibres 3,4... of the optical fibre ribbon 1 and overlies the supporting body 18 connected to the substrate of the integrated optic device or chip 11 (see Figure 2). The position of the integrated optic device or chip 11 with respect to the clamping device 23 and hence to the fixed optical fibre 2 is adjusted until the axes of the core of the fixed optical fibre 2 and the corresponding optical waveguide 12 are in alignment and, if desired index-matching liquid and/or an anti-reflective coating (not shown) may be introduced or may be present between the spaced end faces of the optical fibre 2 and the corresponding optical waveguide 12. Curable adhesive 19 is then applied to the protruding end 2' of the optical fibre 2 to connect the optical fibre permanently to the supporting body 18 and the adhesive is cured so that the optical fibre is permanently fixed with respect to the integrated optic device or chip 11.

This sequence of steps is then repeated for each immediately adjacent optical fibre 3, 4... and the corresponding optical waveguide 13, 14... in turn until all the optical fibres of the optical fibre ribbon 1 have been permanently connected to the optical waveguides of the integrated optic device or chip 11.

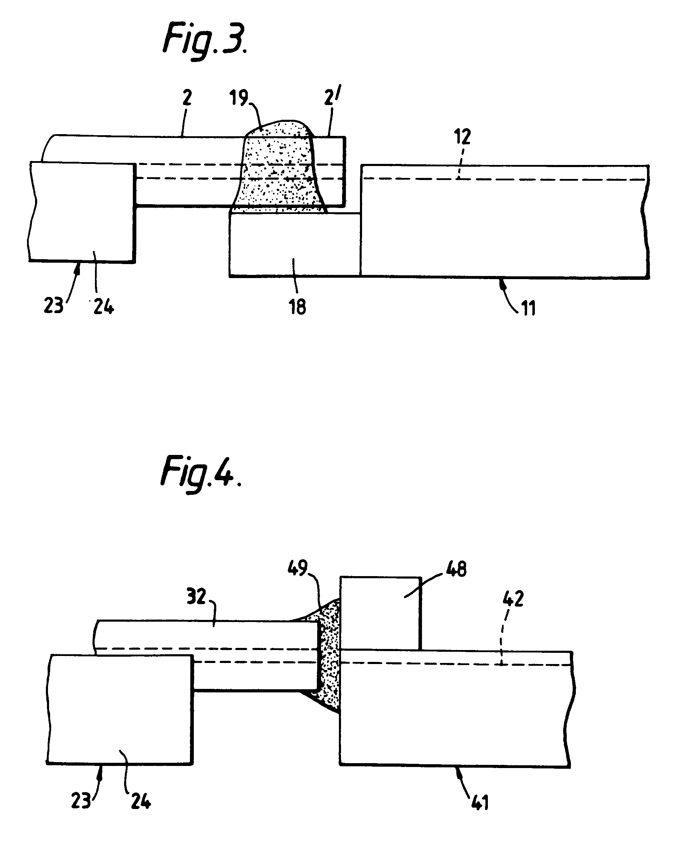

In the second preferred technique for effecting permanent connection between an optical fibre of an optical fibre ribbon and a corresponding optical waveguide of an integrated optic device or chip as shown in Figure 4, the potential area of contact between the end face of the optical fibre 32 and the end face of the substrate of the integrated optic device or chip 41 is increased by mounting on the uppermost surface of the substrate a supporting body 48 which overlies the substrate and which has a side face that is substantially co-planar with the side face of the substrate in which the end faces of the optical waveguides 42,43,44... (of which only waveguide 42 is shown) are exposed. In effecting the permanent connection between an optical fibre 32 and the corresponding optical waveguide 42, transparent curable adhesive 49 is introduced between the end face of the optical fibre and the end faces of the substrate and overlying supporting block 48.

The apparatus illustrated in Figures 1 and 2 is used to effect permanent connections between the optical fibres 32,33,34... of an optical fibre ribbon, (of which only optical fibre 32 is shown) and the optical waveguides 42,43,44... of an integrated optic device or chip 41 using the technique illustrated in Figure 4 but, in this case, in effecting accurate axial alignment of the core of each optical fibre in turn and the corresponding optical waveguide, the integrated optic device or chip 41 is so clamped by the clamp 30 that it is fixed and the clamping device 23 is moved with respect to the integrated optic device or chip until the axes of the core of the optical fibre and the corresponding optical waveguide are in axial alignment.

The improved method of the present invention has the very important advantage that it provides for sequential permanent connection of the optical fibres of a length of optical fibre ribbon with the optical waveguides of an integrated optic device or chip in such a way that each optical fibre of the ribbon is free to move lengthwise to a limited extent with respect to the other optical fibres of the ribbon and that, during permanent connection of any optical fibre with an optical waveguide, the risk that any other optical fibre of the ribbon will be prematurely partially permanently connected to the integrated optic device or chip during such permanent connection of said optical fibre and optical waveguide is substantially reduced.

## Claims

1. A method of effecting permanent end-to-end connections between a plurality of optical fibres (2,3,4...) and optical waveguides (12,13,14...) of an optical component (11) of the kind comprising a substrate supporting a plurality of optical waveguides, which method comprises the steps of positioning the optical component (11) to one side of a jointing station (20) with end faces of the optical waveguides (12,13,14...) of the component exposed at the side face of the substrate nearer the jointing station; stripping any protective covering from an end portion of each length of optical fibre (2,3,4...) to provide exposed end portions of the optical fibres; preparing the end faces of the exposed end portions of the optical fibres so that the end face of each optical fibre is substantially smooth; arranging the exposed end portions of the optical fibres in approximately axial alignment with, but spaced from the end faces of, the optical waveguides; so clamping the exposed end portions of the optical fibres that the exposed end portion of each optical fibre can be caused to move lengthwise towards the substrate to a limited extent relative to the exposed end portions of the other of said optical fibres; arranging the exposed end portions of the optical fibres, over a part of their lengths between the position at which they are so clamped and the distal ends of the exposed end portions the optical fibres so that each fibre follows a curved path (10) whose centre of curvature lies on a line extending transversely of said optical fibres; causing the exposed end portion of an outermost optical fibre to straighten and, instead, follow a substantially rectilinear path so that, as a result, its end (2') to be connected protrudes beyond the ends of the exposed end portions of the other unconnected optical fibres with its end face spaced from the end face of the corresponding optical waveguide (12) of the optical component; effecting accurate axial alignment of the core of said optical fibre and the corresponding optical waveguide; applying curable adhesive (19,49) to said optical fibre and permitting or causing the adhesive to cure so that said optical fibre is permanently fixed with respect to the optical component; and repeating the latter three steps for each immediately adjacent exposed end portion of optical fibre and corresponding optical waveguide until permanent end-to-end connections have been effected between all the optical fibres and corresponding optical waveguides of the optical component.

2. A method as claimed in Claim 1, wherein the side face of the optical component in which the end faces of the optical waveguides are exposed has integral therewith or permanently connected thereto a supporting body (18), the exposed end portion of each optical fibre is disposed above the supporting body and the end of the exposed portion of each optical fibre is so permanently connected to the supporting body by curable adhesive (19) that each optical fibre is indirectly permanently connected to the optical component (11) in axial alignment with the corresponding optical waveguide.

3. A method as claimed in Claim 2, wherein, in effecting axial alignment of the core of said optical fibre and corresponding optical waveguide, after the exposed end portions of said optical fibre has been so straightened the said optical fibre is fixed and the position of the optical component with respect to said fixed optical fibre is adjusted until the axes of the core of the fixed optical fibre and of the corresponding optical waveguide are in alignment.

4. A method as claimed in Claim 1, wherein a transparent curable adhesive (49) is introduced between the spaced end faces of said optical fibre and of the substrate of the optical component and is permitted or caused to cure to effect the permanent connection.

5. A method as claimed in Claim 4, wherein the potential area of contact between the end face of said optical fibre and the end face of the substrate is increased by mounting on the uppermost surface of the substrate a supporting body (48) which overlies the substrate and which has a side face which is substantially co-planar with the side face of the substrate in which the end faces of the optical waveguides are exposed, the transparent curable adhesive being introduced between the end face of said optical fibre and the end faces of the substrate and overlying supporting block.

6. A method as claimed in Claim 4 or 5, wherein, in effecting accurate axial alignment of the core of the optical fibre and the corresponding optical waveguide, the optical component is so clamped that it is fixed and said optical fibre is moved with respect to the optical component until the axes of the core of the optical fibre and of the corresponding optical waveguide are in axial alignment.

7. A method as claimed in any one of the preceding Claims, wherein the limited lengths of the exposed end portions of the optical fibres are arranged so that each fibre follows a curved path (10) whose centre of curvature lies on a line extending transversely of the optical fibres by introducing under said limited lengths of the exposed end portions of the optical fibres in a direction transversely of the optical fibres an elongate member (27) which has a convexly curved surface over and at least partially around which the exposed end portions of the optical fibres (2,3,4...) pass and which can be moved incrementally in the direction of its length and transversely of the optical fibres in such a way that each optical fibre in turn can be caused to drop off an end of the elongate member and adopt a substantially straight and rectilinear path so that its end to be permanently connected to a corresponding optical waveguide then protrudes beyond the ends of the exposed end portions of the other unconnected optical fibres.

8. A method as claimed in Claim 7, wherein incremental movement of the elongate member in the direction transverse of the optical fibres is effected by a screw threaded arrangement.

9. A method as claimed in Claim 7 or 8, wherein clamping of the exposed end portions of the optical fibres is effected by arranging for the exposed end portions to lie in a plurality of longitudinally extending substantially parallel grooves in the uppersurface of a base plate (24) of a material having a low coefficient of friction and by retaining them thereon by a spring loaded pressure pad (25) having a surface which engages the optical fibres and which is of a material having a low coefficient of friction.

10. A method as claimed in Claim 9, wherein the elongate member having a convexly curved surface over which the exposed end portions of the optical fibres lie comprises a rod of circular cross-section having in its surface a single helically extending groove (28) within and partially around turns of which the exposed end portions of the optical fibres are arranged to lie.

**Revendications**

1. Procédé pour réaliser des connexions bout-à-bout permanentes entre une pluralité de fibres optiques (2, 3, 4...) et des guides d'ondes optiques (12, 13, 14...) d'un composant optique (11) du type comportant un substrat supportant une pluralité de guides d'ondes optiques, ce procédé comportant les étapes de positionnement du composé optique (11) sur un côté d'un poste de jonction (20), avec les faces d'extrémité des guides d'ondes optiques (12, 13, 14...) du composant exposées sur la face latérale du substrat plus près du poste de jonction ; de retrait de toute couverture protectrice d'une partie d'extrémité de chaque longueur de fibres optiques (2, 3, 4...) afin de réaliser des parties d'extrémité exposées des fibres optiques ; de préparation des faces d'extrémité des parties d'extrémité exposées des fibres optiques de telle sorte que la face d'extrémité de chaque fibre optique soit substantiellement lisse ; de disposition des parties d'extrémité exposées des fibres optiques en alignement approximativement axial avec les guides d'ondes optiques, mais espacées des faces d'extrémité de ceux-ci ; de maintien des parties d'extrémité opposées des fibres optiques de telle sorte que l'on puisse déplacer dans le sens de la longueur la partie d'extrémité opposée de chaque fibre optique en direction du substrat sur une distance limitée par rapport aux parties d'extrémité opposées des autres desdites fibres optiques ; de disposition des parties d'extrémité exposées des fibres optiques, sur une partie de leur longueur, entre le point auquel elles sont ainsi maintenues et les extrémités distales des parties d'extrémité opposées des fibres optiques de telle sorte que chaque fibre suive un chemin incurvé (10) dont le centre de courbure se trouve sur une ligne s'étendant transversalement par rapport auxdites fibres optiques ; de réalisation d'un redressement de la partie d'extrémité exposée d'une fibre optique située le plus à l'extérieur, de façon à lui faire suivre, à la place, un chemin substantiellement rectiligne, de telle sorte que, en conséquence, son extrémité (2') devant être connectée fasse saillie au-delà des extrémités des parties d'extrémité exposées des autres fibres optiques non connectées, sa face d'extrémité étant espacée de la face d'extrémité du guide d'onde optique correspondant (12) du composant optique ; de réalisation d'un alignement axial précis de l'âme de ladite fibre optique et du guide d'onde optique correspondant ; d'application d'un adhésif durcissable (19, 49) à ladite fibre optique et de réalisation du durcissement de l'adhésif de telle sorte que ladite fibre optique soit fixée de façon permanente par rapport au composant optique : et de répétition des trois dernières étapes pour chaque partie d'extrémité exposée de fibre optique immédiatement adjacente et chaque guide d'onde optique correspondant jusqu'à ce que des connexions bout-à-bout permanentes aient été effectuées entre toutes les fibres optiques et les guides d'ondes optiques correspondants du composant optique.

2. Procédé selon la revendication 1, dans lequel la face latérale du composant optique dans lequel les faces d'extrémité des guides d'ondes optiques sont exposées possèdent, formant une seule pièce avec lui ou étant connectées de façon permanente à celui-ci, un corps de support (18) dans lequel la partie d'extrémité exposée de chaque fibre optique est disposée au-dessus du corps de support et l'extrémité de la partie exposée de chaque fibre optique est connectée de façon permanente au corps de support par un adhésif durcissable (19), de telle sorte que chaque fibre optique soit indirectement connectée de façon permanente au composant optique (11) en alignement axial avec le guide d'onde optique correspondant.

3. Procédé selon la revendication 2, dans lequel, lorsque l'on réalise l'alignement axial de l'âme de ladite fibre optique et du guide d'onde optique correspondant, après que les parties d'extrémité exposées de ladite fibre optique aient été ainsi redressées, ladite fibre optique est fixée et la position du composant optique par rapport à ladite fibre optique fixée est ajustée jusqu'à ce que les axes de l'âme de la fibre optique fixée et du guide d'onde optique correspondant soient alignés.

4. Procédé selon la revendication 1, dans lequel un adhésif transparent durcissable (49) est introduit entre les faces d'extrémité espacées de ladite fibre optique et du substrat du composant optique, et on effectue son durcissement afin de réaliser la connexion permanente.

5. Procédé selon la revendication 4, dans lequel la surface de contact potentielle entre la face d'extrémité de ladite fibre optique et la face d'extrémité du substrat est augmentée par le fait que l'on monte sur la surface supérieure du substrat un corps de support (48) qui recouvre le substrat et qui a une face latérale qui est substantiellement coplanaire à la face latérale du substrat dans lequel les faces d'extrémité des guides d'ondes sont exposées, l'adhésif transparent durcissable étant introduit entre la face d'extrémité de ladite fibre optique et les faces d'extrémité du substrat et le bloc de support susjacent.

6. Procédé selon la revendication 4 ou 5, dans lequel lorsque l'on réalise l'alignement axial précis de l'âme de la fibre optique et du guide d'onde optique correspondant, le composant optique est maintenu de telle sorte qu'il soit fixé et ladite fibre optique est déplacée par rapport au composant optique jusqu'à ce que les axes de l'âme de la fibre optique et du guide d'onde optique correspondant soient alignés axialement.

7. Procédé selon l'une quelconque des revendications précédentes, dans lequel les longueurs limitées des parties d'extrémité exposées des fibres optiques sont disposées de telle sorte que chaque fibre suive un chemin incurvé (10) dont le centre de courbure se trouve sur une ligne s'étendant transversalement par rapport aux fibres optiques en introduisant sous lesdites longueurs limitées des parties d'extrémité exposées des fibres optiques, dans une direction transversale par rapport aux fibres optiques, un élément allongé (27) qui a une surface incurvée de façon convexe sur lequel et au moins partiellement autour duquel passent les parties d'extrémité exposées des fibres optiques (2, 3, 4...), et qui peut être déplacé par incréments dans le sens de sa longueur et transversalement par rapport aux fibres optiques, de telle sorte que l'on puisse faire tomber chaque fibre optique l'une après l'autre d'une extrémité de l'élément allongé et que l'on puisse lui faire adopter un chemin substantiellement rectiligne et rigide de telle sorte que son extrémité devant être connectée de façon permanente à un guide d'onde optique correspondant face alors saillie au-delà des extrémités des parties d'extrémité exposées des autres fibres optiques non connectées.

8. Procédé selon la revendication 7, dans lequel le déplacement par incréments de l'élément allongé dans un sens transversal par rapport aux fibres optiques s'effectue à l'aide d'une disposition à filetage.

9. Procédé selon la revendication 7 ou 8, dans lequel le maintien des parties d'extrémité exposées des fibres optiques s'effectue en disposant les parties d'extrémité exposées de telle sorte qu'elles reposent dans une pluralité de rainures substantiellement parallèles et s'étendant longitudinalement dans la surface supérieure d'une plaque de base (24) d'un matériau ayant un faible coefficient de frottement et en les retenant sur celui-ci à l'aide d'un tampon de pression (25) chargé par un ressort ayant une surface qui s'engrène avec les fibres optiques et qui est en un matériau ayant un faible coefficient de frottement.

10. Procédé selon la revendication 9, dans lequel l'élément allongé ayant une surface incurvée de façon convexe sur laquelle reposent les parties d'extrémité exposées des fibres optiques comporte une tige ayant une section circulaire et ayant dans sa surface une rainure unique (28) s'étendant hélicoïdalement à l'intérieur de laquelle et autour de tours de laquelle reposent partiellement les parties d'extrémité exposées des fibres optiques.

## Patentansprüche

1. Verfahren zum Herstellen von dauerhaften Endverbindungen zwischen mehreren optischen Fasern (2, 3, 4...) und optischen Wellenleitern (12, 13, 14...) eines optischen Bauteils (11), das ein Substrat, das mehrere optische Wellenleiter trägt, aufweist, wobei das Verfahren die Schritte aufweist: Positionieren des optischen Bauteils (11) an einer Seite einer Verbindungsstation (20), wobei Endflächen der optischen Wellenleiter (12, 13, 14) des Bauteils an der Seitenfläche des Substrats, die der Verbindungsstation näher ist, freiliegen, Abstreifen von jeglichen Schutzabdeckungen von einem Endabschnitt von jeder optischen Faserlänge, so daß freigelegte Endabschnitte der optischen Fasern (2, 3, 4...) bereitgestellt werden, Vorbereiten der Endflächen der freigelegten Endabschnitte der optischen Fasern, so daß die Endfläche jeder optischen Faser im wesentlichen glatt ist, Anordnen der freigelegten Endabschnitte der optischen Fasern in ungefährer axialer Ausrichtung mit den optischen Wellenleitern, aber beabstandet von deren Endflächen, Einklemmen der freigelegten Endabschnitte der optischen Fasern derart, daß der freigelegte Endabschnitt jeder optischen Faser in einem begrenztem Ausmaß in Bezug auf die freigelegten Endabschnitte der anderen optischen Fasern in Längsrichtung auf das Substrat zu bewegt werden kann, Anordnen der freigelegten Endabschnitte der optischen Fasern über einen Teil ihrer Längen zwischen der Position, an der sie eingeklemmt sind, und den entfernten Enden der freigelegten Endabschnitte der optischen Fasern, so daß jede Faser einem gebogenen Weg (10) folgt, dessen Bogenmitte auf einer sich quer zu den optischen Fasern erstreckenden Linie liegt, Ausstrecken des freiliegenden Endabschnitts einer außenliegenden optischen Faser, wodurch diese stattdessen einem im wesentlichen geraden weg folgt, so daß infolgedessen ihr zu verbindendes Ende (2') über die Enden der freiliegenden Endabschnitte der anderen nicht verbundenen optischen Fasern hinausragt, wobei ihre Endfläche von der Endfläche des zugehörigen optischen Wellenleiters (12) des optischen Bauteils beabstandet ist, Ausführen einer genauen axialen Ausrichtung des Kerns der optischen Faser und des zugehörigen optischen Wellenleiters, Aufbringen eines härtbaren Klebemittels (19, 49) auf die optische Faser und Ermöglichen oder Bewirken, daß das Klebemittel aushärtet, so daß die optische Faser dauerhaft in Bezug auf das optische Bauelement befestigt ist, und Wiederholen der letzten drei Schritte für jeden direkt benachbarten freigelegten Endabschnitt einer optischen Faser und eines zugehörigen optischen Wellenleiters, bis zwischen allen optischen Fasern und zugehörigen optischen Wellenleitern des optischen Bauteils dauerhafte Endverbindungen hergestellt sind.

2. Verfahren nach Anspruch 1, wobei die Seitenfläche des optischen Bauteils, in dem die Endflächen der optischen Wellenleiter freigelegt sind, einen damit einstückigen oder mit diesem dauerhaft verbundenen Stützkörper (18) aufweist, wobei der freigelegte Endabschnitt jeder optischen Faser über dem Stützkörper angeordnet ist, und das Ende des freigelegten Abschnitts jeder optischen Faser mittels härtbaren Klebemittels (19) mit dem Stützkörper derart dauerhaft verbunden ist, daß jede optische Faser in axialer Ausrichtung mit dem zugehörigen optischen Wellenleiter indirekt dauerhaft mit dem optischen Bauteil (11) verbunden ist.

3. Verfahren nach Anspruch 2, wobei zum Ausführen einer genauen axialen Ausrichtung des Kerns der optischen Faser und des zugehörigen optischen Wellenleiters, nachdem der freigelegte Endabschnitt der optischen Faser ausgestreckt worden ist, die genannte optische Faser befestigt und die Position des optischen Bauteils in Bezug auf die befestigte optische Faser eingestellt wird, bis die Achsen des Kerns der befestigten optischen Faser und des zugehörigen optischen Wellenleiters ausgerichtet sind.

4. Verfahren nach Anspruch 1, wobei ein durchsichtiges härtbares Klebemittel (49) zwischen den beabstandeten Endflächen der optischen Faser und des Substrats des optischen Bauteils eingeführt wird, und es ermöglicht oder bewirkt wird, daß dieses zum Herstellen einer dauerhaften Verbindung aushärtet.

5. Verfahren nach Anspruch 4, wobei die potentielle Berührungsfläche zwischen der Endfläche der optischen Faser und der Endfläche des Substrats vergrößert wird, indem auf die oberste Fläche des Substrats ein Stützkörper (48) angebracht wird, der das Substrat überdeckt und der eine Seitenfläche hat, die im wesentlichen coplanar mit der Seitenfläche des Substrats ist, in der die Endflächen der optischen Wellenleiter freiliegen, wobei das durchsichtige härtbare Klebemittel zwischen der Endfläche der optischen Faser und den Endflächen des Substrats und dem darüberliegenden Stützblock eingeführt wird.

6. Verfahren nach Anspruch 4 oder 5, wobei zum Ausführen einer genauen axialen Ausrichtung des Kerns der optischen Faser und dem zugehörigen optischen Wellenleiter, das optische Bauteil so festgeklemmt wird, daß es festliegt und die optische Faser in Bezug auf das optische Bauteil so lange bewegt wird, bis die Achsen des Kerns der optischen Faser und des zugehörigen optischen Wellenleiters axial ausgerichtet sind.

7. Verfahren nach einem der vorstehenden Ansprüche, wobei die begrenzten Längen der freigelegten Endabschnitte der optischen Fasern so angeordnet sind, daß jede Faser einem gebogenen Weg (10) folgt, dessen Bogenmitte auf einer sich quer zu den optischen Fasern erstreckenden Linie liegt, indem unter den begrenzten Längen der freigelegten Endabschnitte der optischen Fasern in einer Richtung quer zu den optischen Fasern ein längsgestrecktes Element (27) eingeführt wird, das eine konvex gekrümmte Oberfläche hat, über die zumindest teilweise die freigelegten Endabschnitte der optischen Fasern (2, 3, 4...) laufen und das in seiner Längsrichtung und quer zu den optischen Fasern stückweise in solcher Weise bewegt werden kann, daß daraufhin jede optische Faser an einem Ende des längsgestreckten Elements abgeworfen werden kann und diese dadurch einen im wesentlichen gestreckten und geradlinigen Weg einnimmt, so daß ihr Ende, das dauerhaft mit einem zugehörigen optischen Wellenleiter verbunden werden soll, dann über die Enden der freigelegten Endabschnitte der anderen nicht-verbundenen optischen Fasern hinausragt.

8. Verfahren nach Anspruch 7, wobei die stückweise Bewegung des längsgestreckten Elements in der Richtung quer zu den optischen Fasern mit einer Schrauben-Gewinde-Anordnung bewirkt wird.

9. Verfahren nach Anspruch 7 oder 8, wobei das Festklemmen der freigelegten Endabschnitte der optischen Fasern dadurch erreicht wird, daß die freigelegten Endabschnitte in mehreren längsgestreckten, im wesentlichen parallelen Nuten in der Oberfläche einer Basisplatte (24) aus einem Material mit einem niedrigen Reibungskoeffizienten eingelegt werden und darauf mittels eines unter Federspannung stehenden Druckkissens (25) festgehalten werden, das eine Fläche hat, die mit den optischen Fasern in Eingriff steht und das aus einem Material mit einem niedrigen Reibungskoeffizienten besteht.

10. Verfahren nach Anspruch 9, wobei das längsgestreckte Element mit einer konvex gekrümmten Oberfläche, über der die freigelegten Endabschnitte der optischen Fasern liegen, einen Stab mit einem kreisförmigen Querschnitt aufweist, der in seiner Oberfläche eine einzelne, sich schraubenförmig erstreckende Nut (28) hat, in dessen Windungen und diese teilweise umgreifend die freigelegten Endabschnitte der optischen Fasern eingelegt sind.

# Fig.1.

# Fig.2.

## Fig.3.

## Fig.4.